# EUROPÄISCHE PATENTSCHRIFT

(11) **EP 0 950 268 B1**
(45) Veröffentlichungstag und Bekanntmachung des Hinweises auf die Patenterteilung: **04.07.2001**
(21) Anmeldenummer: 97949941.5
(22) Anmeldetag: 17.11.1997
(51) Int. Cl.: H01M 8/04

(54) **VERFAHREN ZUM ERKENNEN EINES GASLECKS IN EINER BRENNSTOFFZELLENANLAGE MIT POLYMERELEKTROLYTEN UND BRENNSTOFFZELLENANLAGE**
PROCESS FOR RECOGNISING A GAS LEAK IN A FUEL CELL INSTALLATION WITH POLYMER ELECTROLYTES, AND FUEL CELL INSTALLATION
PROCEDE DE RECONNAISSANCE DE FUITES DE GAZ DANS UNE INSTALLATION A CELLULES ELECTROCHIMIQUES AVEC DES ELECTROLYTES POLYMERES, ET INSTALLATION A CELLULES ELECTROCHIMIQUES

(30) Priorität: 28.11.1996 DE 19649436
(43) Veröffentlichungstag der Anmeldung: 20.10.1999
(73) Patentinhaber: SIEMENS AKTIENGESELLSCHAFT, 80333 München (DE)
(72) Erfinder: BETTE, Willi, D-91056 Erlangen (DE); LERSCH, Josef, D-91336 Heroldsbach (DE)
(86) Internationale Anmeldenummer: DE9702695
(87) Internationale Veröffentlichungsnummer: WO9824137

(56) Entgegenhaltungen:
- EP-A- 0 716 463
- PATENT ABSTRACTS OF JAPAN vol. 005, no. 027 (E-046), 18.Februar 1981 -& JP 55 154075 A (HITACHI LTD;OTHERS: 01), 1.Dezember 1980,

## Beschreibung

Die Erfindung bezieht_sich auf ein Verfahren zum Erkennen eines Gaslecks zwischen dem Anoden- und dem Kathodengasraum einer PEM-Brennstoffzelle und auf eine Brennstoffzellenanlage zum Durchführen des Verfahrens.

Es ist bekannt, daß bei der Elektrolyse von Wasser die Wassermoleküle durch elektrischen Strom in Wasserstoff und Sauerstoff zerlegt werden. In der Brennstoffzelle läuft dieser Vorgang in umgekehrter Richtung ab. Bei der elektrochemischen Verbindung von Wasserstoff und Sauerstoff zu Wasser entsteht elektrischer Strom mit hohem Wirkungsgrad, und zwar, wenn als Brenngas reiner Wasserstoff eingesetzt wird, ohne Emission von Schadstoffen und Kohlendioxid. Auch mit technischen Brenngasen, beispielsweise Erdgas oder Kohlegas, und mit Luft oder mit mit O₂ angereicherter Luft anstelle von reinem Sauerstoff, erzeugt eine Brennstoffzelle deutlich weniger Schadstoffe und weniger CO₂ als andere Energieerzeuger, die mit fossilen Energieträgern arbeiten. Die technische Umsetzung des Prinzips der Brennstoffzelle hat zu sehr unterschiedlichen Lösungen, und zwar mit verschiedenartigen Elektrolyten und mit Betriebstemperaturen zwischen 80° C und 1000° C, geführt. In Abhängigkeit von ihrer Betriebstemperatur werden die Brennstoffzellen in Nieder-, Mittel- und Hochtemperatur-Brennstoffzellen eingeteilt, die sich jeweils wiederum durch verschiedene technische Ausführungsformen unterscheiden.

Neben diesen grundsätzlichen Vorteilen bietet eine Brennstoffzelle mit einem festen Elektrolyten aus Kunststoff (Polymere Elektrolyt-Membran oder PEM) weitere positive Eigenschaften, wie geringe Betriebstemperatur (kleiner/gleich 80 °C), günstiges Überlastverhalten, geringe Spannungsdegradation, hohe Lebensdauer, günstiges Last- und Temperaturzyklusverhalten und Fehlen eines flüssigen korrosiven Elektrolyten. Außerdem ist sie auch für einen Betrieb mit Luft aus der Umgebung anstatt Sauerstoff geeignet. Alle diese Eigenschaften machen die mit Luft betreibbare PEM-Brennstoffzelle zu einem nahezu idealen Stromerzeuger, z.B. für den abgasfreien elektrischen Betrieb von Kraftfahrzeugen.

Ein Brennstoffzellenblock, der in der Fachliteratur auch "Stack" genannt wird, setzt sich in der Regel aus einer Vielzahl von planar aufgebauten und aufeinandergestapelten Brennstoffzellen zusammen. Da der Brennstoffzellenblock nicht für sich allein betreibbar ist, sind im allgemeinen der Brennstoffzellenblock, ein Betriebsteil und eine zugeordnete Modulelektronik zu einem Brennstoffzellenmodul zusammengefaßt. Im Betriebsteil sind die Einrichtungen für die Versorgung mit Betriebsmitteln, beispielsweise Wasserstoff (H₂), Sauerstoff (O₂) oder Luft aus der Umgebung, für die Produktwasserabfuhr, die Verlustwärmeabfuhr, die Befeuchtung der Betriebsmittel und die Abfuhr der inerten Gasbestandteile zusammengefaßt.

Während des Betriebes eines PEM-Brennstoffzellenmoduls führt das Auftreten eines Defektes in einer einzelnen PEM-Brennstoffzelle zur Störung des Betriebes des gesamten PEM-Brennstoffzellenmoduls. Beispielsweise kann ein Gasübertritt von dem Anoden- zu dem Kathodengasraum der PEM-Brennstoffzelle aufgrund eines Lecks in der Membran-Elektrodeneinheit zu einer am Katalysator ausgelösten thermischen Reaktion von Wasserstoff (H₂) und Sauerstoff (O₂) führen. Als Problem erweist sich das rasche Erkennen des Gaslecks zwischen dem Anoden- und dem Kathodengasraum und daraus folgend das Identifizieren einer solchen defekten Brennnstoffzelle im Brennstoffzellenmodul.

Bei einem aus dem Stand der Technik bekannten Verfahren zum Erkennen eines Gaslecks zwischen der Anoden- und der Kathodenseite der Brennstoffzelle wird eine Druckdifferenz zwischen diesen erzeugt und die Änderung der Geschwindigkeit der Druckdifferenz ausgewertet. Bei diesem Verfahren werden somit Drücke gemessen. Dieses Verfahren ist eine integrale Messung über mehrere Brennstoffzellen des Brennstoffzellenmoduls, d.h. es besteht keine Möglichkeit zur Identifizierung einer einzelnen defekten Brennstoffzelle im Brennstoffzellenmodul. Außerdem ist das Verfahren zum Erkennen kleiner Lecks in einem Brennstoffzellenmodul aufgrund seiner geringen Empfindlichkeit ungeeignet.

Der Erfindung liegt nun die Aufgabe zugrunde, ein Verfahren mit einer ausreichenden Empfindlichkeit zum Erkennen eines Gaslecks zwischen dem Anoden- und dem Kathodengasraum einer_ PEM-Brennstoffzelle anzugeben.

Bei einem Verfahren zum Erkennen eines Gaslecks zwischen dem Anoden- und dem Kathodengasraum einer PEM-Brennstoffzelle durch Erfassen der Zellspannung U wird gemäß der Erfindung in einem ersten Zeitabschnitt der Anoden- und der Kathodengasraum mit Stickstoff (N₂) gespült, in einem zweiten Zeitabschnitt der Kathodengasraum mit Sauerstoff (O₂) und der Anodengasraum mit Wasserstoff (H₂) gefüllt und anschließend das Absinken der Zellspannung U in Abhängigkeit von der Zeit unter einen Grenzwert U_{G} gemessen und ausgewertet.

Die auswertbare Zellspannung U zwischen dem Anoden- und dem Kathodengasraum liegt im Bereich der Leerlaufspannung der PEM-Brennstoffzelle von etwa 1 V. Mit dieser auswertbaren Zellspannung U weist das Verfahren eine ausreichende Empfindlichkeit zum Erkennen des Gaslecks in der PEM-Brennstoffzelle auf, wodurch eine technisch zuverlässige Anwendbarkeit gewährleistet ist. Jede einzelne Zelle kann mit dem Verfahren individuell untersucht werden. Der Nachteil einer integralen Messung, wo nur entschieden werden kann, ob eine defekte Zelle innerhalb einer Gruppe von mehreren Zellen vorliegt, diese aber nicht genau lokalisiert werden kann, wird hier vermieden. Je schneller die Zellspannung U unter den Grenzwert U_{G} absinkt, desto größer ist die Wahrscheinlichkeit für das Vorhandensein eines Lecks in der Brennstoffzelle.

Vorzugsweise wird der Anodengasraum und/oder der Kathodengasraum während der Messung geschlossen gehalten. Eine weitere Zufuhr von Betriebsmitteln ist somit unterbunden. Eine Vergrößerung des eventuell vorhandenen Lecks aufgrund von heftigen Reaktionen zwischen ständig der Brennstoffzelle zugeführten Betriebsmitteln wird unterbunden.

Insbesondere kann zwischen dem ersten und dem zweiten Zeitabschnitt der Sauerstoff (O₂) aus dem Kathodengasraum größtenteils entfernt werden. Im Kathodengasraum bleibt nur noch ein Restsauerstoff (O₂) übrig, der an der Kathode haftet. Das Zeitintervall für die Messung kann somit verkürzt werden; eine Vergrößerung des Lecks aufgrund von ansonsten verstärkt auftretenden chemischen Reaktionen kann hierdurch im wesentlichen vermieden werden.

In einer weiteren Ausgestaltung ist als Grenzwert U_{G} für die Zellspannung U etwa die Hälfte der Leerlaufspannung der PEM-Brennstoffzelle vorgegeben. Die Hälfte der Leerlaufspannung beträgt ungefähr 0,5 V. Fällt die Zellspannung U innerhalb einer Zeitspanne von 15 bis 20 s, insbesondere innerhalb von 16 s, unter den Grenzwert U_{G} ab, so kann mit Sicherheit angenommen werden, daß die Brennstoffzelle ein Leck aufweist. Bei einer funktionsfähigen Brennstoffzelle ohne Leck würde die Zellspannung erst nach wenigstens 50 s unter den Grenzwert U_{G} absinken. Eine defekte Brennstoffzelle kann mit dem Verfahren also eindeutig erkannt werden.

Eine Brennstoffzellenanlage mit einer PEM-Brennstoffzelle hat gemäß der Erfindung eine Steuerung zum Durchführen des Verfahrens, d.h. zum Zuführen des Stickstoffs und zum Abprüfen bzw. Messen der Zellspannung.

Weitere vorteilhafte Ausgestaltungen sind in den Unteransprüchen wiedergegeben.

Zum besseren Verständnis der Erfindung und ihrer Weiterbildungen wird ein Ausführungsbeispiel anhand einer Figur erläutert. In der FIG ist eine PEM-Brennstoffzellenanlage schematisch dargestellt.

Gemäß der FIG umfaßt eine Brennstoffzellenanlage 40 eine PEM-Brennstoffzelle (Zelle 2), die einen Anodengasraum 4 und einen Kathodengasraum 6 aufweist. Der Anoden- und der Kathodengasraum 4 bzw. 6 sind durch eine Membran-Elektrodeneinheit 8 voneinander trennt.

Über eine Zuführungsleitung 10 mit einem ersten steuerbaren Ventil 12 und eine Abführungsleitung 14 mit einem zweiten steuerbaren Ventil 16 werden dem Anodengasraum 4 Betriebsmittel zu- bzw. aus demselbigen abgeführt. Entsprechend werden über eine Zuführungsleitung 18 mit einem dritten steuerbaren Ventil 20 und eine Abführungsleitung 22 mit einem vierten steuerbaren Ventil 24 dem Kathodengasraum 6 Betriebsmittel zu- bzw. aus demselbigen abgeführt. Über eine weitere Zuführungsleitung 42 mit einem fünften steuerbaren Ventil 44, wobei die Zuführungsleitung 42 sich gabelt und in die Zuführungsleitungen 10,18 mündet, kann die Zelle 2 mit Stickstoff (N₂) gespült werden.

Die steuerbaren Ventile 12,16,20,24 und 44 werden mit einer Steuerung 46 geschaltet.

Der in der Zelle 2 erzeugte elektrische Strom wird über eine elektrische Leitung 28 einer Last 48 zur weiteren Nutzung zugeführt. In die elektrische Leitung 28 ist ein elektrischer Schalter 50 geschaltet, über den im geschlossenen Zustand der elektrische Strom aus der Zelle 2 abfließt. Ist der Schalter 50 geöffnet, so kann über eine elektrische Leitung 26 mit einem in ihr geschalteten Voltmeter 52 die elektrische Zellspannung U der Zelle 2 gemessen werden, ohne daß ein elektrischer Strom fließt.

Bei einem Verfahren zum Erkennen eines Gaslecks 32 zwischen dem Anoden- und dem Kathodengasraum 4 bzw. 6 in der Membran-Elektrodeneinheit 8 werden in einem ersten Zeitabschnitt der Anoden- und der Kathodengasraum 4 bzw. 6 mit Stickstoff (N₂) gespült. Durch diese Maßnahme wird ein inerter Zustand im Anoden- und Kathodengasraum 4 bzw. 6 erzielt. Um diesen inerten Zustand zu erreichen, kann auch ein anderes inertes Gas verwendet werden. Im ersten Zeitabschnitt sind die steuerbaren Ventile 44, 16 und 2-4 geöffnet.

Anschließend wird der Stickstoff (N₂) über die Abführungsleitungen 14 und 22 aus der Zelle 2, beispielsweise durch Abpumpen, entfernt.

In einem zweiten Zeitabschnitt, der zeitlich auf den ersten Zeitabschnitt folgt, wird der Kathodengasraum 6 für etwa 1 s mit Sauerstoff (O₂) bei einem absoluten Druck von ungefähr 2,3 bar gefüllt.

Danach wird das Ventil 20 in der Zuführungsleitung 18 für den Kathodengasraum 6 geschlossen, um eine weitere Zufuhr von Sauerstoff (O₂) zu verhindern. Über die Abführungsleitung 22 wird nun der Sauerstoff (O₂) fast vollständig entfernt und das Ventil 24 in der Abführungsleitung 22 anschließend geschlossen. Auf der Kathode 30 der Membran-Elektrodeneinheit 8 ist ein Rest von Sauerstoff (O₂) durch Adsorption angelagert, welcher nicht aus dem Kathodengasraum 6 entfernt worden ist.

Der Anodengasraum 4 wird im zweiten Zeitabschnitt bei geschlossenem Ventil 16 für ungefähr 0,1 s mit Wasserstoff (H₂) bei einem absoluten Druck von etwa 2,0 bar aufgefüllt. Nach dem Auffüllen wird das Ventil 12 in der Zuführungsleitung 10 geschlossen. Durch diese Maßnahme wird die reaktionsfähige Menge an Wasserstoff (H₂) auf das Volumen des Anodengasraumes 4 und der dazugehörigen Abschnitte der Zuführungsleitung 10 und der Abführungsleitung 14 begrenzt.

Nach Ablauf dieser Prozedur sind die Ventile 12, 16, 20, 24 und 44 geschlossen und die Zelle 2 ist von ihrer Umgebung gasdicht abgetrennt. In diesem Zustand der Brennstoffzellenanlage 40 wird die Zellspannung U der Zelle 2 bei geöffnetem Schalter 50, d.h.daß kein elektrischer Strom fließt, gemessen. Mit der Messung sollte jeweils unmittelbar nach dem zweiten Zeitabschnitt begonnen werden.

Die Zellspannung U, d.h. die Leerlaufspannung, hat zu Beginn der Messung einen Wert von ca. 1 V. Weist die Zelle 2 kein Gasleck in der Membran-Elektrodeneinheit 8 auf, so fällt die Zellspannung U innerhalb einer Zeitspanne von ca. 1 min auf 0 V ab. Weist hingegen die Zelle 2 ein Gasleck auf, so fällt die Spannung wesentlich schneller ab, da der Wasserstoff (H₂) des Anodengasraumes 4 direkt mit dem Sauerstoff (O₂) des Kathodengasraumes 6 reagiert. Als Kriterium für das Vorhandensein eines Gaslecks wird somit definiert, daß die Zellspannung U innerhalb eines vorgegebenen Zeitintervalls, das deutlich kleiner als 1 min ist, unterhalb eines Grenzwertes U_{G}, der wesentlich kleiner als die Leerlaufspannung ist, absinkt.

Die Zeitspanne sollte zwischen 15 und 20 s bemessen sein. Eine Zeitspanne von 16 s hat sich in der Praxis besonders bewährt, wobei der Grenzwert U_{G} ungefähr die Hälfte der Leerlaufspannung, d.h. etwa 0,5 V, beträgt. Fällt die Zellspannung U also innerhalb dieser Zeitspanne unter diesen Grenzwert U_{G} ab, so ist das Gasleck 32 in der Zelle 2 vorhanden.

Das Verfahren weist aufgrund der im Bereich der Leerlaufspannung liegenden auswertbaren Zellspannung U eine ausreichend hohe Empfindlichkeit auf. In einem Brennstoffzellenblock, der aus einer Anzahl von Zellen besteht, kann das Verfahren auch auf mehrere in Reihe geschaltete Zellen (bis zu beispielsweise 5) angewendet werden. Es kann dann allerdings nur entschieden werden, ob eine defekte Zelle in dieser Gruppe von Zellen vorliegt. Der Grenzwert U_{G} muß dann entsprechend der Anzahl der Zellen in der zu untersuchenden Gruppe angepaßt werden.

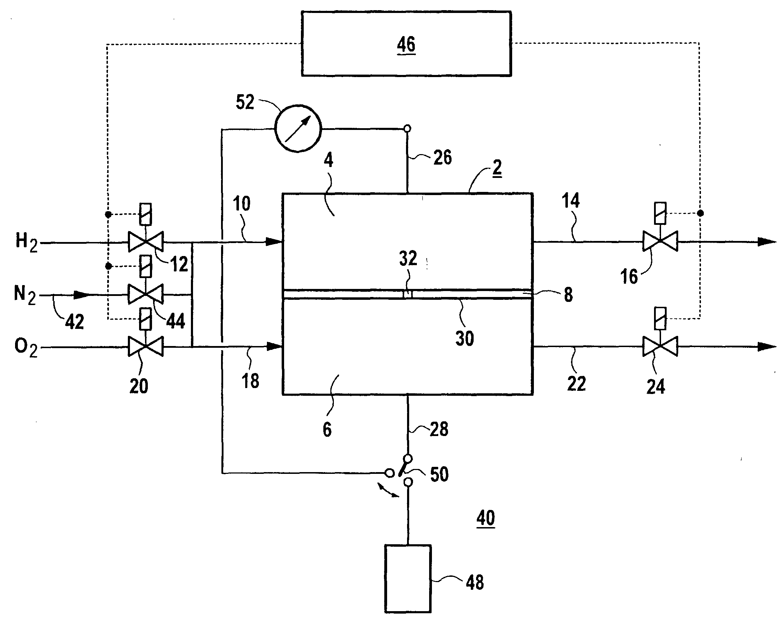

## Patentansprüche

1. Verfahren zum Erkennen eines Gaslecks (32) zwischen dem Anoden- und dem Kathodengasraum (4 bzw. 6) einer PEM-Brennstoffzelle (2) durch Erfassen der Zellspannung U,
**dadurch gekennzeichnet,** daß in einem ersten Zeitabschnitt der Anoden- und der Kathodengasraum (4 bzw. 6) mit Stickstoff (N₂) gespült, in einem zweiten Zeitabschnitt der Kathodengasraum (6) mit Sauerstoff (O₂) und der Anodengasraum (4) mit Wasserstoff (H₂) gefüllt werden und anschließend das Absinken der Zellspannung U in Abhängigkeit von der Zeit unter einen Grenzwert U_{G} gemessen und ausgewertet wird.

2. Verfahren nach Anspruch 1,
**dadurch gekennzeichnet,** daß der Anodengasraum (4) und/oder der Kathodengasraum (6) während der Messung geschlossen gehalten wird.

3. Verfahren nach Anspruch 1 oder 2,
**dadurch gekennzeichnet,** daß zwischen dem ersten und zweiten Zeitabschnitt der Stickstoff (N₂) aus dem Anoden- und dem Kathodengasraum (4 bzw. 6) entfernt wird.

4. Verfahren nach einem der Ansprüche 1 bis 3,
**dadurch gekennzeichnet,** daß im zweiten Zeitabschnitt der Kathodengasraum (6) für etwa 1 s mit Sauerstoff (O₂) bei einem absoluten Druck von ungefähr 2,3 bar gefüllt wird.

5. Verfahren nach einem der Ansprüche 1 bis 4,
**dadurch gekennzeichnet,** daß nach dem zweiten Zeitabschnitt der Sauerstoff (O₂) größtenteils entfernt wird.

6. Verfahren nach einem der Ansprüche 1 bis 5,
**dadurch gekennzeichnet,** daß der Grenzwert U_{G} etwa die Hälfte der Leerlaufspannung der PEM-Brennstoffzelle (2), insbesondere ungefähr 0,5 V, beträgt.

7. Verfahren nach einem der Ansprüche 1 bis 6,
**dadurch gekennzeichnet,** daß die Zellspannung U für 15 bis 20 s, insbesondere für etwa 16 s, gemessen wird.

8. Verfahren nach einem der Ansprüche 1 bis 7,
**dadurch gekennzeichnet,** daß im zweiten Zeitabschnitt der Anodengasraum (4) für etwa 0,1 s mit Wasserstoff (H₂) bei einem absoluten Druck von ungefähr 2,0 bar gefüllt wird.

9. Brennstoffzellenanlage (40) mit einer PEM-Brennstoffzelle (2), die Anschlüsse (42,26,28) zum Zuführen von Stickstoff (N₂) und zum Abgreifen der elektrischen Spannung aufweist, und einer Steuerung (46) zur Durchführung des Verfahrens nach einem der Ansprüche 1 bis 8.

## Claims

1. Method for detecting a gas leak (32) between the anode gas space (4) and the cathode gas space (6) of a PEM fuel cell (2) by recording the cell voltage U, characterized in that in a first time segment the anode gas space (4) and the cathode gas space (6) are purged with nitrogen (N₂), in a second time segment the cathode gas space (6) is filled with oxygen (O₂) and the anode gas space (4) is filled with hydrogen (H₂), and then the fall in the cell voltage U below a limit value U_{G} is measured and evaluated as a function of time.

2. Method according to Claim 1, characterized in that the anode gas space (4) and/or the cathode gas space (6) are kept closed during the measurement.

3. Method according to Claim 1 or 2, characterized in that between the first and second time segments the nitrogen (N₂) is removed from the anode gas space (4) and the cathode gas space (6).

4. Method according to one of Claims 1 to 3, characterized in that in the second time segment the cathode gas space (6) is filled for approximately 1 s with oxygen (O₂) at an absolute pressure of approximately 2.3 bar.

5. Method according to one of Claims 1 to 4, characterized in that after the second time segment most of the oxygen (O₂) is removed.

6. Method according to one of Claims 1 to 5, characterized in that the limit value U_{G} is approximately half the no-load voltage of the PEM fuel cell (2), in particular is approximately 0.5 V.

7. Method according to one of Claims 1 to 6, characterized in that the cell voltage U is measured for 15 to 20 s, in particular for approximately 16 s.

8. Method according to one of Claims 1 to 7, characterized in that in the second time segment the anode gas space (4) is filled for approximately 0.1 s with hydrogen (H₂) at an absolute pressure of approximately 2.0 bar.

9. Fuel cell installation (40) having a PEM fuel cell (2), which has connections (42,26,28) for supplying nitrogen (N₂) and for tapping the electric voltage, and a control unit (46) for carrying out the method according to one of Claims 1 to 8.

## Revendications

1. Procédé pour détecter une fuite de gaz (32) entre l'espace gazeux anodique (4) et l'espace gazeux cathodique (6) d'une pile à combustible PEM (2) par mesure de la tension de pile U, caractérisé en ce que, dans un premier laps de temps, on balaie avec de l'azote (N₂) l'espace gazeux anodique (4) et l'espace gazeux cathodique (6); dans un deuxième laps de temps, on remplit d'oxygène (O₂) l'espace gazeux cathodique (6) et d'hydrogène (H₂) l'espace gazeux anodique (4), puis on mesure et exploite la diminution de la tension de pile U en fonction du temps en-dessous d'une valeur limite U_{G}.

2. Procédé selon la revendication 1, caractérisé en ce que l'espace gazeux anodique (4) et/ou l'espace gazeux cathodique (6) sont maintenus fermés pendant la mesure.

3. Procédé selon la revendication 1 ou 2, caractérisé en ce que l'azote (2) est éliminé de l'espace gazeux anodique (4) et de l'espace gazeux cathodique (6) entre le premier et le deuxième laps de temps.

4. Procédé selon l'une des revendications 1 à 3, caractérisé en ce que, dans le deuxième laps de temps, l'espace gazeux cathodique (6) est, pendant environ 1 s, rempli d'oxygène (O₂) sous une pression absolue d'environ 2,3 bar.

5. Procédé selon l'une des revendications 1 à 4, caractérisé en ce que, après le deuxième laps de temps, on élimine la plus grande partie de l'oxygène (O₂).

6. Procédé selon l'une des revendications 1 à 5, caractérisé en ce que la valeur limite U_{G} est approximativement égale à la moitié de la tension à vide la pile à combustible PEM (2), en particulier à environ 0,5 V.

7. Procédé selon l'une des revendications 1 à 6, caractérisé en ce que la tension de pile U est mesurée pendant 15 à 20 s, en particulier pendant environ 16 s.

8. Procédé selon l'une des revendications 1 à 7, caractérisé en ce que, dans le deuxième laps de temps, l'espace gazeux anodique (4) est rempli d'hydrogène (H₂) pendant environ 0,1 s sous une pression absolue d'environ 2,0 bar.

9. Installation de pile à combustible (40) comportant une pile à combustible PEM (2), qui comporte des raccordements (42, 26, 28) pour amener de l'azote (N₂) et prélever la tension électrique, et une commande (46) pour mettre en oeuvre le procédé selon l'une des revendications 1 à 8.
